# EUROPÄISCHE PATENTSCHRIFT

(11) **EP 1 859 665 B1**
(45) Veröffentlichungstag und Bekanntmachung des Hinweises auf die Patenterteilung: **12.08.2009**
(21) Anmeldenummer: 07009936.1
(22) Anmeldetag: 18.05.2007
(51) Int. Cl.: A01B 73/02

(54) **Gezogenes landwirtschaftliches Arbeitsgerät grosser Arbeitsbreite**
Towed agricultural implement with large working width
Machine agricole tractée à grande largeur de travail

(30) Priorität: 26.05.2006 DE 102006024479
(43) Veröffentlichungstag der Anmeldung: 28.11.2007
(73) Patentinhaber: Amazonen-Werke H. Dreyer GmbH & Co. KG, 49205 Hasbergen (DE)
(72) Erfinder: Thielicke, René, Dr., 04420 Markranstädt (DE); Sosnicki, Jürgen, 04205 Leipzig (DE); Faber, Andreas, 04425 Taucha (DE)

(56) Entgegenhaltungen:
- EP-A- 1 529 430
- FR-A- 2 805 434
- US-A1- 2003 110 996

## Beschreibung

Die Erfindung betrifft ein gezogenes landwirtschaftliches Arbeitsgerät großer Arbeitsbreite gemäß des Oberbegriffes des Patentanspruches 1.

Ein derartiges Arbeitsgerät ist durch die EP 15 29 430 A1 bekannt.

Ein weiteres Arbeitsgerät ist beispielsweise durch die US 44 25 971 und FR 280 5 434 A1 bekannt. Nachteilig ist bei diesem Gerät, dass es in Transportstellung eine relativ große Länge aufweist, sowie die Deichsel eine wesentlich größere Länge als die in Transportstellung nach vorn geklappten Seitenrahmen aufweisen muss. Darüber hinaus ist die Gewichtsverteilung bzgl. des Fahrwerkes der Maschine bei sich in Transportstellung befindlichen und nach vorn geklappten Seitenrahmen sehr ungünstig. Die Stützlast auf die Deichsel bzw. die Anhängekupplung des Zugfahrzeuges ist dann sehr groß.

Der Erfindung liegt die Aufgabe zugrunde, mit einfachen Maßnahmen unter Vermeidung der vorgenannten Nachteile eine kompakte Transportstellung für das Arbeitsgerät zu schaffen.

Diese Aufgabe wird erfindungsgemäß durch das Merkmal des Kennzeichens des Anspruches 1 gelöst. Infolge dieser Maßnahmen wird erreicht, dass die nach vorn eingeklappten Seitenrahmen in Transportstellung nach hinten verschoben werden können, um so eine bessere Lastverteilung in der Transportstellung des Arbeitsgerätes bzgl. der Deichsel und des Fahrwerkes zu erreichen. Zur Schaffung der kompakten Transportposition des Arbeitsgerätes ist der Seitenrahmen nach hinten zu verschieben. Weiterhin wird eine Verkürzung des Arbeitsgerätes in der Arbeitsstellung erreicht. Weiterhin kann die Deichsel kürzer ausgeführt werden. Insgesamt ergibt sich eine kompakte Transportstellung für das Arbeitsgerät.

Um einerseits die auftretenden Gelenkkräfte in den Schwenkgelenken, sowie eine gleichzeitige Führung der Seitenrahmen beim Überführen von der Transportstellung in Arbeitsstellung und umgedreht zu erreichen, ist vorgesehen, dass zwischen dem Mittelrahmen und den jeweiligen Seitenrahmen eine Führungsstrebe mittels Schwenkgelenken angeordnet ist. Eine vorteilhafte Zuordnung von Zwischenrahmen und Führungsstrebe ergibt sich dadurch, dass der Zwischenrahmen und die Führungsstrebe in aufrechter Stellung des Zwischenrahmens ein Viergelenk bilden. Hierdurch ergibt sich eine vorteilhafte Führung des Seitenrahmens und Ausführung der Ein- und Ausklappbewegung des Seitenrahmens. Eine vorteilhafte Ausgestaltung der Gelenke, mit denen die Führungsstrebe angeordnet ist, ergibt sich dadurch, dass die Führungstrebe jeweils mittels eines Universalgelenkes, insbesondere Kreuzgelenkes am Seitenrahmen und Mittelrahmen angelenkt ist.

Eine vorteilhafte Verschwenkung sowohl des Zwischenrahmens, wie des Seitenrahmens wird dadurch erreicht, dass die Führungsstrebe jeweils mittels eines Universalgelenkes, insbesondere Kreuzgelenk am Seitenrahmen und Mittelrahmen angelenkt ist. Eine vorteilhafte Verschwenkung des Schwenkrahmens wird dadurch erreicht, dass das motorische Stellelement zwischen dem Mittelrahmen und dem Schwenkrahmen angeordnet ist.

Durch das Zusammenspiel von Schwenkrahmen, Zwischenrahmen und Führungsstreben wird beim Betätigen der motrorischen Stellelemente ein automatisches Ein- und Ausklappen der Seitenrahmen in die vorgesehenen Positionen erreicht.

Durch die Führungsstrebe, die zwischen dem Mittelrahmen und dem Seitenrahmen angeordnet ist, wird in Arbeitsstellung eine Verteilung der auf die Seitenrahmen einwirkende Zugkraft erreicht. Es wird erreicht, dass die Aufhängungskräfte in allen Lagerstellen der Gelenke, mit dem der Seitenrahmen am Mittelrahmen angeordnet ist, gegenüber einer herkömmlichen Anlenkung erheblich niedriger sind. Für den Klappvorgang werden die Führungsstreben wie vor erwähnt ebenfalls genutzt. Die Aufhängungspunkte der Streben sowie der Schwenkrahmen auf jeder Seite des Arbeitsgerätes ergeben ein Gelenkviereck. Durch das Schwenken des Schwenkrahmens ergibt sich eine Eindrehbewegung der Seitenrahmen. Das Gelenkviereck ermöglicht hierbei nicht nur das Eindrehen der Seitenrahmen, sondern es wird auch eine Verschiebung der Seitenrahmen in Richtung des Fahrwerkes des Gerätes erreicht. Somit können die Seitenrahmen dadurch besonders Platz sparend und effektiv für die Lastverteilung, insbesondere im Hinblick auf die Transportstellung angeordnet werden. Durch eine Variation der Schwenkrahmenlänge kann die Position des Seitenrahmens in der Transportstellung variiert werden, dies ist wiederum für die Lastverteilung zwischen Zugmaschine und Fahrwerk des Arbeitsgerätes erforderlich.

Weitere Einzelheiten der Erfindung sind der Beispielsbeschreibung und den Zeichnungen zu entnehmen. Hierbei zeigen
- Fig. 1: das Arbeitsgerät in Arbeitsstellung und in perspektivischer Ansicht,
- Fig. 2: das Arbeitsgerät in Arbeitsstellung und in der Ansicht von oben,

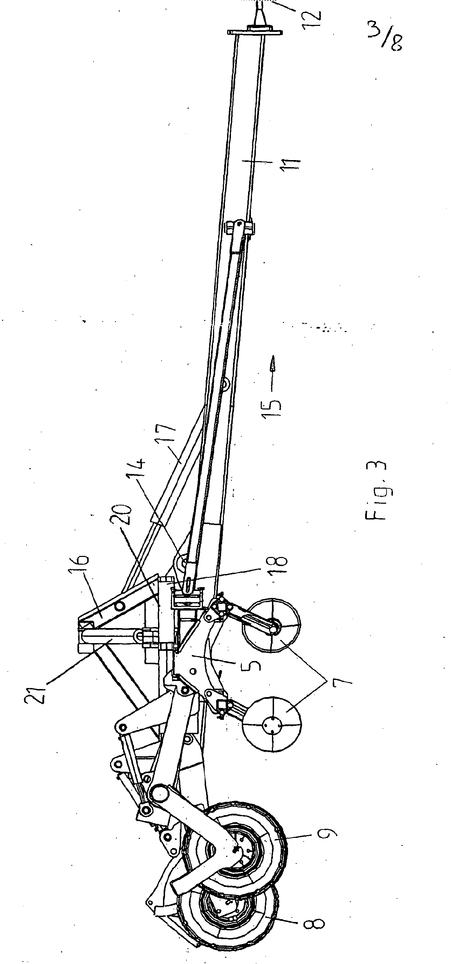

- Fig. 3: das Arbeitsgerät in Arbeitsstellung und in Seitenansicht,
- Fig 4: das Arbeitsgerät nach der ersten Schwenkphase zum Überführen aus der Arbeitsstellung in die Transportstellung in perspektivischer Ansicht,
- Fig. 5: das Arbeitsgerät in der zur Hälfte durchgeführten zweiten Schwenkphase von Arbeitsstellung in Transportstellung in perspektivischer Darstellung,
- Fig. 6: das Arbeitsgerät in der zur Hälfte durchgeführten zweiten Schwenkphase von Arbeitsstellung in Transportstellung in der Ansicht von oben,
- Fig. 7: das Arbeitsgerät in Transportstellung nach Beendigung der zweiten Schwenkphase in perspektivischer Darstellung und
- Fig. 8: das Arbeitsgerät in Transportstellung in der Draufsicht.

Das gezogene landwirtschaftliche Arbeitsgerät ist im dargestellten Beispiel für eine Arbeitsbreite von 15m ausgelegt: Hierbei weist die Mittelsektion 1 eine Arbeitsbreite von 3m auf, während die Seitensektionen 2 und 3 jeweils eine Arbeitsbreite von 6m im Ausführungsbeispiel aufweisen. Die größere Arbeitsbreiten lassen sich ebenfalls realisieren. Das gezogene landwirtschaftliche Arbeitsgerät großer Arbeitsbreite, welches als Bodenbearbeitungsgerät ausgebildet ist, weist den Mittelrahmen 4 der Mittelsektion und jeweils seitlich des Mittelrahmens 4 angeordneten Seitenrahmen 5 und 6 der Seitensektionen 2 und 3 auf. Sowohl an dem Mittelrahmen 4 als auch an dem Seitenrahmen 5, 6 sind auf der Vorderseite die den Boden bearbeitenden Bodenbearbeitungswerkzeuge 7 und auf der Rückseite jeweils die Bodenwalzen 8, 9, 10, die die Arbeitswerkzeuge 7 in der Tiefe führen und gleichzeitig den gelockerten Boden wieder andrücken, angeordnet. Die Bodenwalze 9 der Mittelsektion 1 ist gleichzeitig als Fahrwerk für das gezogene Gerät ausgebildet. Der Mittelrahmen 4 weist auf auf der Vorderseite die Zugdeichsel 11 auf, die auf ihrer Vorderseite eine Zugöse 12 zur Ankupplung an eine Anhängevorrichtung eines Ackerschleppers besitzt. An dem Mittelrahmen 4 ist im Bereich der vorderen Bodenbearbeitungsgeräte 7 mittels Schwenkgelenken 13, deren Schwenkachsen 14 quer zur Fahrtrichtung 15 verlaufen ein den Mittelrahmen 4 übergreifender Schwenkrahmen 16 angeordnet. Zwischen dem Schwenkrahmen 16 und der mit dem Mittelrahmen 4 verbundenen Zugdeichsel 11 sind die beiden als Hydraulikzylinder 17 ausgebildeten motorische Stellelemente zum Verschwenken des Schwenkrahmens 16 mit den daran angeordneten Seitenrahmen 5, 6 angeordnet. Zwischen den Schwenkrahmen 16 und den jeweiligen Seitenrahmen 5, 6 sind ebenfalls mittels Schwenkgelenken 18, deren Schwenkachsen 19 in Arbeitsstellung bzw. liegender Position des Schwenkrahmens 16 in Fahrtrichtung 15 verlaufen, jeweils ein Zwischenrahmen 20 angeordnet. Zwischen dem Mittelrahmen 4 und den jeweiligen Zwischenrahmen 20 ist jeweils ein als Hydraulikzylinder 21 ausgebildetes motorisches Stellelement zum Verschwenken des Zwischenrahmens 20 und zugeordneten Seitenrahmens 5, 6 angeordnet. Weiterhin ist zwischen der dem Mittelrahmen 4 zugeordneten Deichsel 11 und dem jeweiligen Seitenrahmen 5, 6 jeweils eine Führungsstrebe 22 mittels Schwenkgelenken 23, die als Universalgelenke ausgebildet sind, angeordnet. Die Universalgelenke 23 sind im Ausführungsbeispiel als Kreuzgelenke ausgebildet.

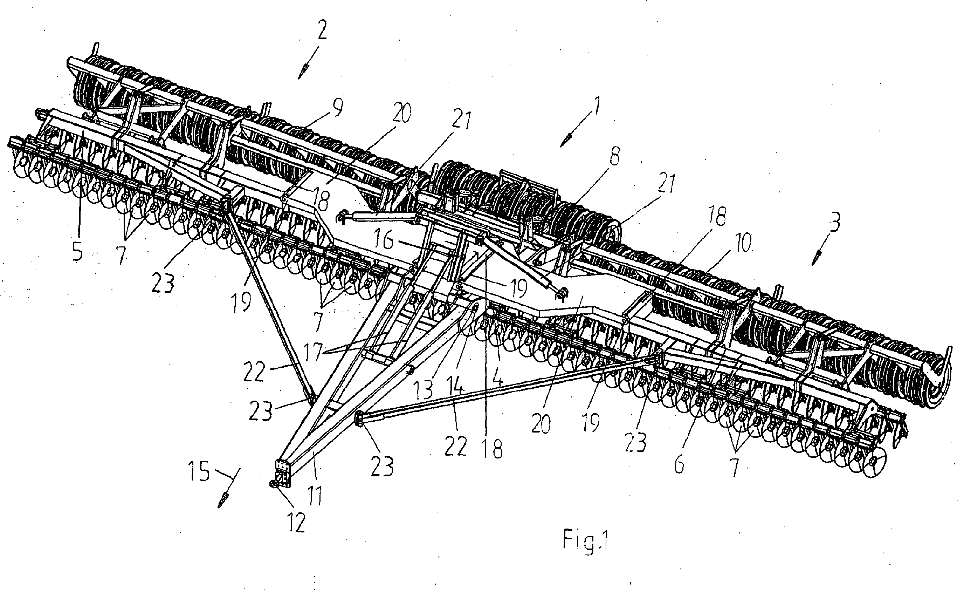

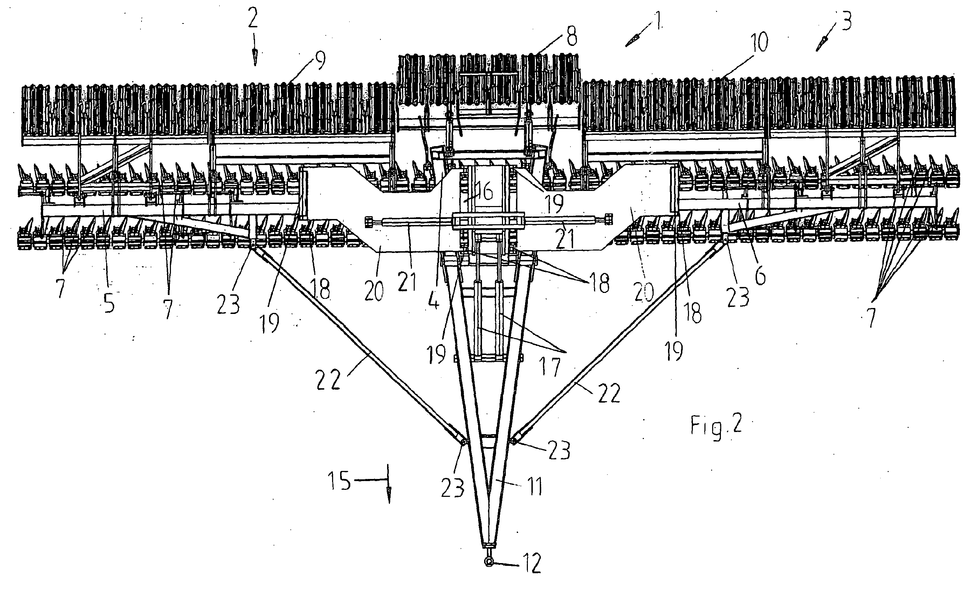

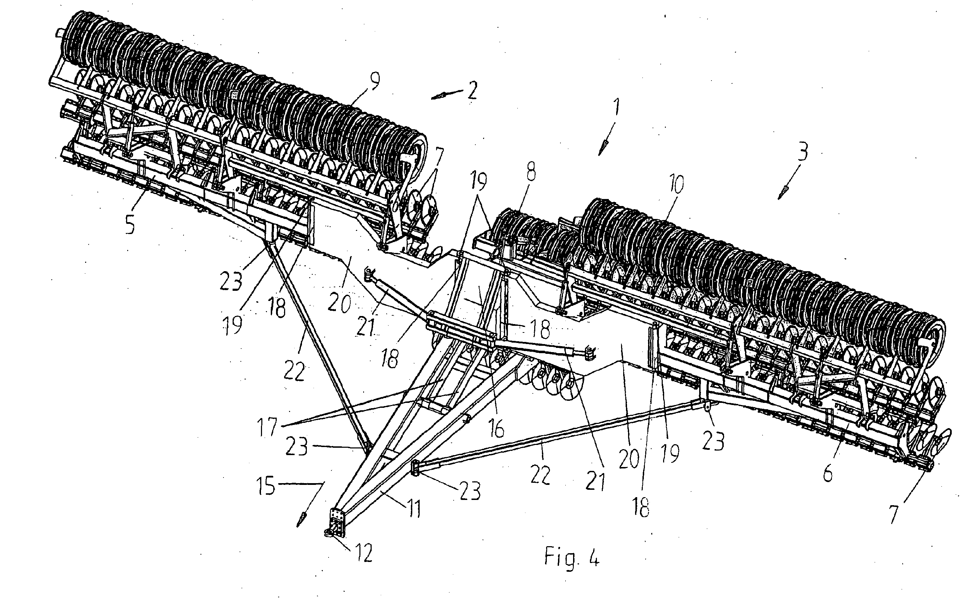

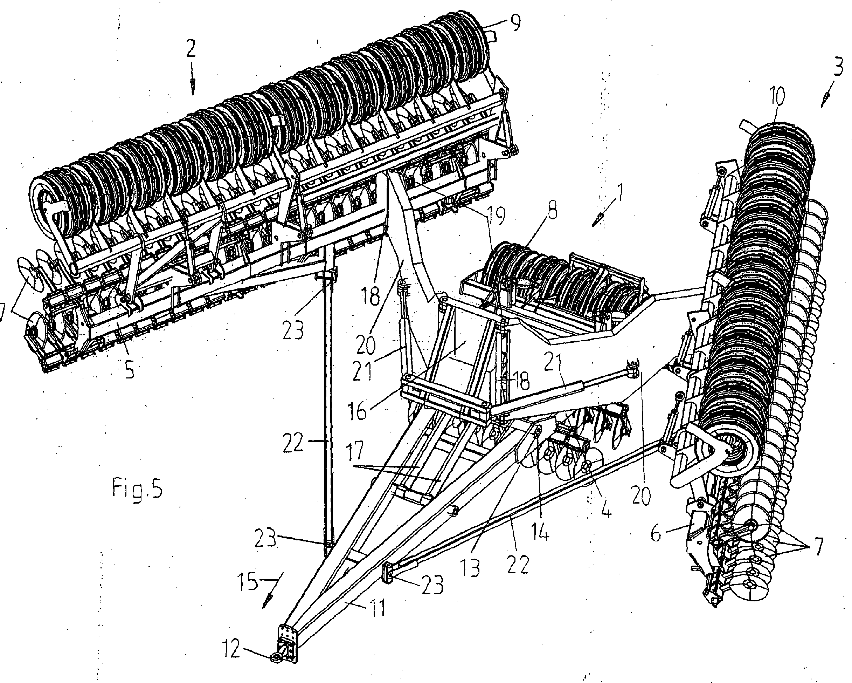

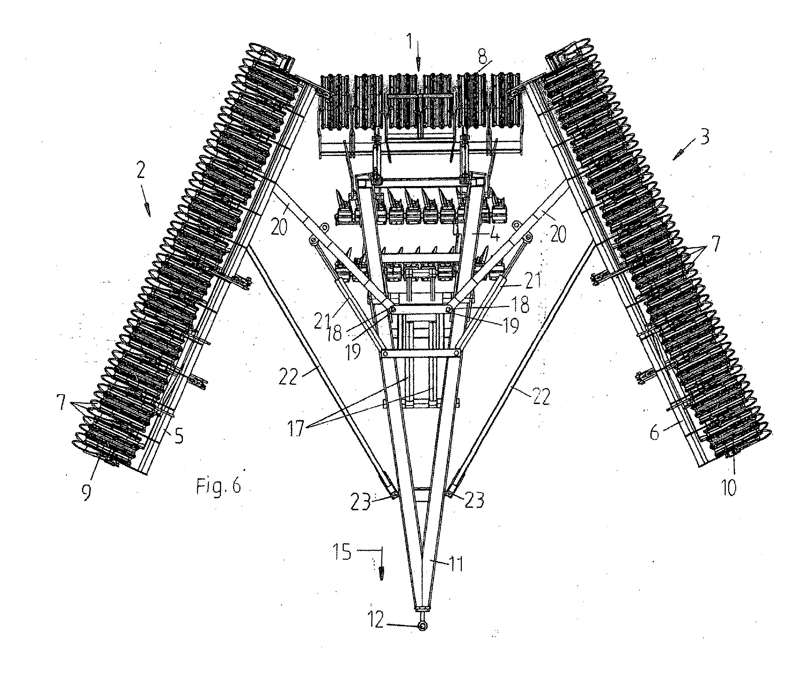

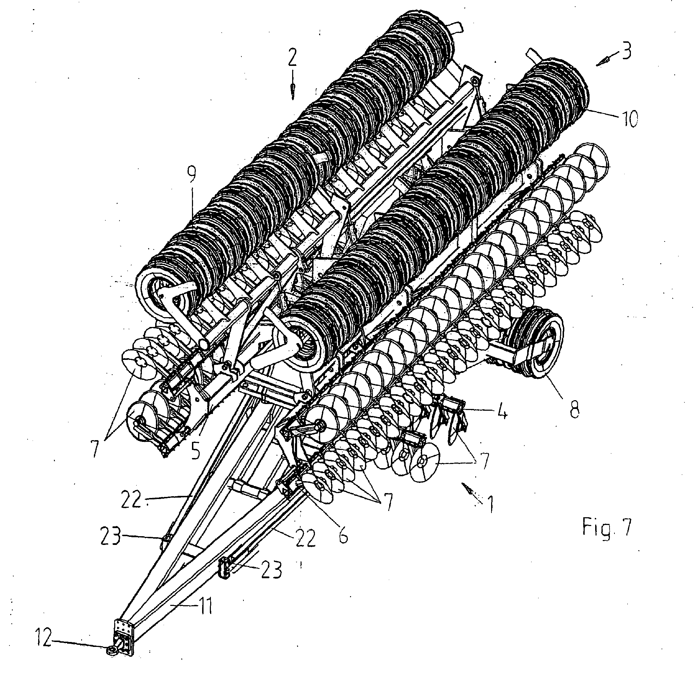

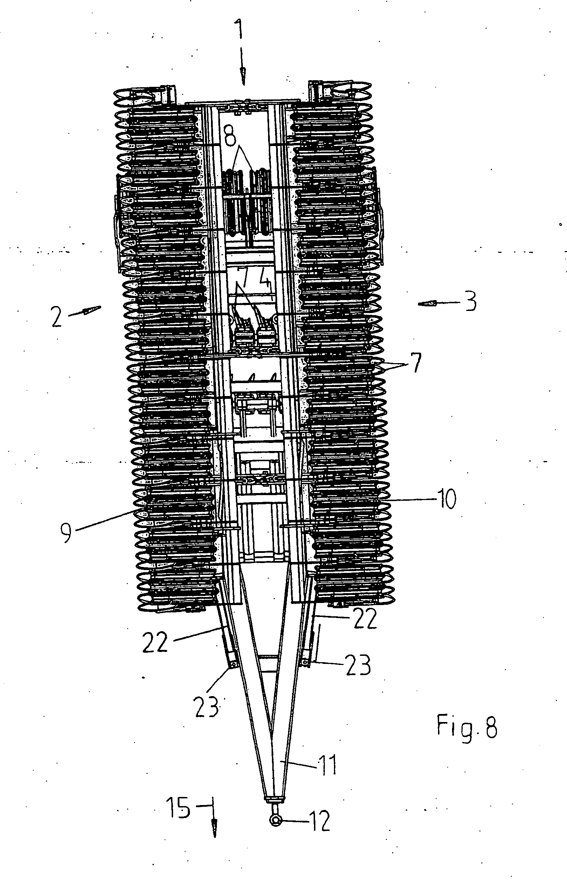

Um das Bodenbearbeitungsgerät aus der in den Fig. 1 und 2 dargestellten Arbeitsstellung in die in den Fig. 7 und 8 dargestellte Transportstellung zu überführen, wird zunächst über die Hydraulikzylinder 17, die mittels nicht dargestellter Leitung an die Hydraulikanlage des Ackerschleppers angeordnet sind, der Schwenkrahmen 16 aus der liegenden Position gemäß Fig. 1 und 2 um die Schwenkachse 14 um 90° in die in Fig. 4 dargestellte aufrechte Stellung verschwenkt. Hierdurch werden gleichzeitig die Zwischenrahmen 20 und die daran angeordneten Seitenrahmen 5, 6 ebenfalls um die quer zur Fahrtrichtung 15 verlaufende Schwenkachse 14 aus der liegenden Arbeitsposition um 90° in eine aufrechte Position verschwenkt, wie Fig. 4 zeigt. Nach dieser ersten Überführungsphase von Arbeitsstellung in Transportstellung werden die zwischen dem Mittelrahmen 4 und den Zwischenrahmen 20 angeordneten Hydraulikzylinder 21, die ebenfalls über nicht dargestellte Hydraulikschläuche mit der Hydraulikanlage des das Gerät ziehenden Schleppers verbunden sind, über die in Fig. 5 und 6 dargestellte Zwischenphase in die in den Fig. 7 und 8 dargstellte Transportstellung verschwenkt. Hierbei werden durch Ausfahren der Hydraulikzylinder 21 die Zwischenrahmen 20 um die aufrechte Schwenkachse 19 um 90° nach hinten verschwenkt, wobei gleichzeitig der jeweilige Seitenrahmen 5, 6 um die hintere aufrechte Schwenkachse 19, die sich im Bereich der Schwenkgelenke 18 zwischen Zwischenrahmen 16 und Seitenrahmen 5, 6 befindet um jeweils 90° nach vorn verschwenkt. Diese zwangsläufige Schwenkbewegung der Seitenrahmen 5, 6 wird durch die zwischen dem zu dem Mittelrahmen 4 gehörenden Deichsel 11 und dem Seitenrahmen 5, 6 angeordneten Führungsstreben 22 erreicht. Durch die Anordnung des Zwischenrahmens 20 zwischen dem am Mittelrahmen 4 angeordneten Schwenkrahmen 16 und dem Seitenrahmen 5, 6 werden gleichzeitig die Seitenrahmen 5, 6 mit den daran angeordneten Bodenbearbeitungswerkzeugen 7 und den Bodenwalzen 8, 10 nicht nur um 90° nach vorn verschwenkt, sondern gleichzeitig erfolgt eine translatorische Versetzung der Seitenrahmen 5, 6 mit den daran angeordneten Bodenbearbeitungswerkzeugen 7 und Bodenwalzen 8, 10 nach hinten. Somit befindet sich also ein Drittel der Länge des Bodenbearbeitungsgerätes über der als Fahrwerk dienende Bodenwalze 9. Hierdurch wird eine kompakte Transportstellung und eine gute Gewichtsverteilung zwischen der Anhängeöse 12 und der als Fahrwerk dienenden Bodenwalze 9 erreicht.

Der jeweilige Zwischenrahmen 20, Mittelrahmen 4, Seitenrahmen 5, 6 und die jeweilige Führungsstrebe 22 bilden in dieser Stellung ein Viergelenk. Durch die Anordnung des Zwischenrahmens 20 zwischen dem Schwenkrahmen 16 und den Seitenrahmen 5, 6 wird nicht nur die Eindrehbewegung der Seitenrahmen erreicht, sondern das Gelenkviereck ermöglicht neben dem Eindrehen der Seitenrahmen 5, 6 auch eine Verschiebung der Seitenrahmen 5, 6 in Richtung des Fahrwerkes 9 nach hinten. Somit können die Seitenrahmen 5, 6 besonders Platz sparend und effektiv für die Lastverteilung des Gerätes angeordnet werden. Durch eine Variation oder andere Auswahl der Länge der Zwischenrahmen 20 kann die Position der Seitenrahmen 5, 6 in der Transportstellung optimal auf der jeweiligen Länge der Seitenrahmen 5, 6 und der gewünschten Lastverteilung zwischen Zugöse 12 und Fahrwerk 9 erreicht werden.

## Patentansprüche

1. Gezogenes landwirtschaftliches Arbeitsgerät großer Arbeitsbreite mit einem Mittelrahmen (4) und jeweils seitlich des Mittelrahmens (4) angeordneten Seitenrahmen (5,6), die gegenüber dem Mittelrahmen (4) zur Reduzierung der Arbeitsbereite oberhalb des Mittelrahmens (4) einziehbar sind, wobei an dem Mittelrahmen (4) und den Seitenrahmen (5,6) jeweils Bodenbearbeitungswerkzeuge (7) angeordnet sind, wobei an dem Mittelrahmen (4) ein diesen übergreifender Schwenkrahmen (16) überSchwenkelenke (13) deren Schwenkachsen (14) quer zur Fahrtrichtung (15) verlaufen, angeordnet ist, wobei zwischen dem Mittelrahmen (4) und den Schwenkrahmen (16) zumindest ein motorisches Stellelement (17) angeordnet ist, wobei der Schwenkrahmen (16) mittels des zumindest eines motorischen Stellelementes (17) um etwa 90° aus einer liegenden in eine aufrechte Position verschwenkbar ist, wobei jeweils seitlich an dem Schwenkrahmen (16) mittels Schwenkgelenken (18), deren Schwenkachsen (19) in liegender Position des Schwenkrahmens (16) zumindest annähernd in Fahrtrichtung (15) verlaufen, die Seitenrahmen (5,6) angelenkt sind, wobei zwischen dem Schwenkrahmen (16) und den Seitenrahmen (5,6) jeweils motorische Stellelemente (21) wirksam sind, mittels denen die Seitenrahmen (5,6) gegenüber dem Schwenkrahmen (16) und dem Mittelrahmen (4) verschwenkbar sind, wobei zwischen dem Schwenkrahmen (16) und dem jeweiligen Seitenrahmen (5,6) mittels Schwenkgelenken (18), deren Schwenkachsen (19) in liegender Position des Schwenkrahmen (16) zumindest annähernd in Fahrtrichtung (15) verlaufen, ein Zwischenrahmen (20) angeordnet ist, **dadurch gekennzeichnet, dass** der Zwischenrahmen (20) nach dem Verschwenken durch den Schwenkrahmen (16) in die aufrechte Position jeweils um etwa 90° gegenüber dem Seitenrahmen (5, 6) und dem Schwenkrahmen (16) verschwenkbar ist.

2. Arbeitsgerät nach Anspruch 1, **dadurch gekennzeichnet, dass** zwischen dem Mittelrahmen (4) und dem jeweiligen Seitenrahmen (5,6) eine Führungsstrebe (22) mittels Schwenkgelenken (23), angeordnet ist.

3. Arbeitsgerät nach einem oder mehreren der vorstehenden Ansprüche, **dadurch gekennzeichnet, dass** der Zwischenrahmen (20) und die Führungsstrebe (22) in aufrechter Stellung des Zwischenrahmens (20) ein Viergelenk bilden.

4. Arbeitsgerät nach einem oder mehreren der vorstehenden Ansprüche, **dadurch gekennzeichnet, dass** die Führungsstrebe (22) jeweils mittels eines Universalgelenkes (23), insbesondere Kreuzgelenk, am Seitenrahmen (5, 6) und Mittelrahmen (4) angelenkt ist.

5. Arbeitsgerät nach Anspruch 1, **dadurch gekennzeichnet, dass** der Zwischenrahmen (20) um eine aufrechte Achse (19) gegenüber dem Schwenkrahmen (16) nach hinten und der jeweilige Seitenrahmen um eine aufrechte Achse (19) nach vorn jeweils um etwa 90° verschwenkt werden.

6. Arbeitsgerät nach Anspruch 1, **dadurch gekennzeichnet, dass** das motorische Stellelement (17) zwischen Mittelrahmen (4) und Schwenkrahmen (16) angeordnet ist.

## Claims

1. Towed agricultural implement with a large working width, with a central frame (4) and side frames (5, 6) which are each arranged to the sides of the central frame (4) and can be pulled in in relation to the central frame (4) in order to reduce the working width above the central frame (4), wherein tillage implements (7) are arranged in each case on the central frame (4) and the side frames (5, 6), wherein a pivoting frame (16) which engages over the central frame (4) is arranged on the latter via pivoting joints (13), the pivot axes (14) of which run transversely with respect to the direction of travel (15), wherein at least one motorized adjusting element (17) is arranged between the central frame (4) and the pivoting frame (16), wherein the pivoting frame (16) can be pivoted through approximately 90° from a horizontal into a vertical position by means of the at least one motorized adjusting element (17), wherein the side frames (5, 6) are each articulated laterally on the pivoting frame (16) by means of pivoting joints (18), the pivot axes (19) of which run approximately in the direction of travel (15) in the horizontal position of the pivoting frame (16), wherein motorized adjusting elements (21) are in each case effective between the pivoting frame (16) and the side frames (5, 6) and can be used to pivot the side frames (5, 6) in relation to the pivoting frame (16) and the central frame (4), and wherein an intermediate frame (20) is arranged between the pivoting frame (16) and the respective side frame (5, 6) by means of pivoting joints (18), the pivot axes (19) of which run at least approximately in the direction of travel (15) in the horizontal position of the pivoting frame (16), **characterized in that**, after being pivoted by the pivoting frame (16) into the vertical position, the intermediate frame (20) can in each case be pivoted through approximately 90° in relation to the side frame (5, 6) and the pivoting frame (16).

2. Implement according to Claim 1, **characterized in that** a guide strut (22) is arranged between the central frame (4) and the respective side frame (5, 6) by means of pivoting joints (23).

3. Implement according to one or more of the preceding claims, **characterized in that** the intermediate frame (20) and the guide strut (22) form a four-bar linkage in the vertical position of the intermediate frame (20).

4. Implement according to one or more of the preceding claims, **characterized in that** the guide strut (22) is in each case articulated on the side frame (5, 6) and central frame (4) by means of a universal joint (23), in particular cardan joint.

5. Implement according to Claim 1, **characterized in that** the intermediate frame (20) is pivoted rearwards in relation to the pivoting frame (16) about a vertical axis (19) and the respective side frame is pivoted forwards about a vertical axis (19), in each case through approximately 90°.

6. Implement according to Claim 1, **characterized in that** the motorized adjusting element (17) is arranged between the central frame (4) and pivoting frame (16).

## Revendications

1. Machine agricole tractée, à grande largeur de travail comportant :
un châssis central (4) et chaque fois un châssis latéral (5, 6) installé à côté du châssis central (4),
les châssis latéraux peuvent être rétractés par rapport au châssis central (4) pour réduire la largeur de travail, au-dessus du châssis central (4),
le châssis central (4) et les châssis latéraux (5, 6,) sont équipés chacun d'outils pour le travail du sol (7),
le châssis central (4) est muni d'un châssis basculant (16) chevauchant le châssis central, par l'intermédiaire d'articulations de basculement (13) dont les axes de basculement (14) sont dirigés transversalement à la direction de déplacement (15),
un élément d'actionnement à moteur (17) est installé entre le châssis central (4) et le châssis basculant (16),
le châssis basculant (16) peut être basculé par l'intermédiaire d'au moins un élément d'actionnement à moteur (17), d'environ 90° à partir d'une position couchée dans une position verticale,
les châssis latéraux (5, 6) sont articulés chacun latéralement par rapport au châssis basculant (16), par l'intermédiaire d'articulations de basculement (18) dont les axes de basculement (19) en position couchée du châssis basculant (16) sont dirigés au moins sensiblement dans la direction de déplacement (15),
des éléments d'actionnement à moteur (21) sont prévus entre le châssis basculant (16) et les châssis latéraux (5, 6), permettant de pivoter, les châssis latéraux (5, 6) par rapport au châssis basculant (16) et au châssis central (4),
un châssis intermédiaire (20) est prévu entre le châssis basculant (16) et chaque châssis latéral (5, 6) respectif, par l'intermédiaire d'articulations de basculement (18) dont les axes de basculement (19) en position couchée du châssis basculant (16) sont dirigés au moins sensiblement dans la direction de déplacement (15),
**caractérisée en ce qu'**
après basculement par le châssis basculant (16) dans la position verticale, le châssis intermédiaire (20) peut pivoter respectivement d'environ 90° par rapport aux châssis latéraux (5, 6) et au châssis basculant (16).

2. Machine agricole selon la revendication 1,
**caractérisée par**
une entretoise de guidage (22) installée avec des articulations de pivotement (23) entre le châssis central (4) et le châssis latéral (5, 6) respectif.

3. Machine agricole selon les revendications précédentes,
**caractérisée en ce que**
le châssis intermédiaire (20) et les entretoises de guidage (22) forment un quadrangle lorsque le châssis intermédiaire (20) est en position verticale.

4. Machine agricole selon les revendications précédentes,
**caractérisée en ce que**
l'entretoise de guidage (22) est articulée respectivement par l'intermédiaire d'un joint universel (23) notamment d'une articulation à croisillons sur le châssis latéral (5, 6) et le châssis central (4).

5. Machine agricole selon la revendication 1,
**caractérisée en ce que**
le châssis intermédiaire (20) pivote autour d'un axe vertical (19) par rapport au châssis basculant (16), vers l'arrière et le châssis latéral respectif pivote autour d'un axe vertical (19) vers l'avant, chaque fois d'environ 90°.

6. Machine agricole selon la revendication 1,
**caractérisée en ce que**
l'élément d'actionnement à moteur (17) est installé entre le châssis central (4) et le châssis basculant (16).
